(19) Europäisches Patentamt
European Patent Office
Office européen des brevets

(11) EP 4 667 906 A1

# (12) EUROPEAN PATENT APPLICATION

(43) Date of publication:
**24.12.2025 Bulletin 2025/52**

(21) Application number: **24183269.0**

(22) Date of filing: **20.06.2024**

(51) International Patent Classification (IPC):
***G01N 21/17*** *(2006.01)*

(52) Cooperative Patent Classification (CPC):
**G01N 21/1702; G01N 21/1717; G01N 29/2425;**
G01N 2021/1704; G01N 2021/1731

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Sensirion AG**
**8712 Stäfa (CH)**

(72) Inventors:
- **Wehrli, Dominik**
  **8006 Zürich (CH)**
- **Winger, Martin**
  **8712 Stäfa (CH)**
- **Bürgi, Lukas**
  **8049 Zürich (CH)**

## (54) PHOTOACOUSTIC GAS SENSOR

(57) A photoacoustic gas sensor (1) for the detection of target gas is proposed. A light source (3) is arranged and configured to generate photoacoustic pressure modulations in the detection volume, but also thermoacoustic pressure modulations by resistive heating. The photoacoustic gas sensor (1) further comprises a heat source (5) arranged in the measurement cell (2) to induce thermoacoustic pressure modulations in the measurement volume (21). A light source driver (31) is configured to modulate the power of the light source (3) periodically such that the magnitude of a Fourier component of the resulting photoacoustic pressure modulations is indicative of the target gas concentration. A heat source driver (51) is configured to modulate the power of the heat source (5) with the same period but phase-shifted such that the resulting thermoacoustic pressure modulations cancel the thermoacoustic pressure modulations due to the resistive heating of the light source (3).

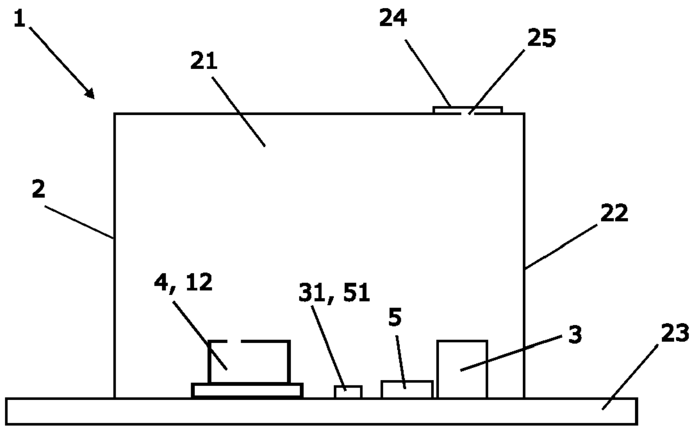


Fig. 1

EP 4 667 906 A1

## Description

### Technical field

The invention relates to photoacoustic gas sensors and to a method of measuring a target gas with photoacoustic gas sensors.

### Background art

Photoacoustic gas sensors utilize the interaction of electromagnetic radiation ("light") with matter to determine the concentration of a target gas in a carrier gas. Molecules of the target gas can absorb photons if the photons' energy corresponds to a difference in energy of rovibronic states of the molecules. The excited molecules can distribute the gained energy in the carrier gas by collisions and thereby heat the gas. The change in temperature is concomitant with a change in pressure that can be detected by a pressure transducer such as a microphone. If the light intensity is modulated periodically then the photoacoustic microphone signal is modulated accordingly, and via lock-in demodulation the target gas concentration can ideally be determined in an offset-fee manner---no target gas means no light absorption and no pressure change. In reality, the efficiency of the light source is not perfect, and part of the energy used to generate light is converted into thermal energy due to resistive heating instead of light. If the measurement cell holding the carrier gas is not perfectly thermally insulated from the light source, the thermal energy will heat the carrier gas and thus change the pressure even in the absence of target gas. This thermoacoustic signal has by design the same modulation frequency as the photoacoustic signal.

EP3550286 discloses a miniaturized, non-resonant photoacoustic gas sensor with a hotplate packaged with an infrared filter as light source. The light source is placed inside the acoustic measurement cell.

The scientific publication obtainable under the permalink https://doi.org/10.1063/1.2778624 discloses a resonant photoacoustic $NO_2$ sensor with a blue LED light source placed outside the acoustic measurement cell. To compensate for a thermoacoustic background signal due to the blue LEDs heating the measurement cell window by light absorption in the cell window, the authors also shine light into the measurement cell using near infrared LEDs at a wavelength where $NO_2$ light absorption is negligible. The near-infrared light pulses are 180° phase-shifted with respect to the blue LED light pulses, both at 50% duty cycle. As a result, the measurement cell window is heated uniformly in time and demodulation of the microphone signal at the light modulation frequency does not lead to an acoustic signal. On the other hand, $NO_2$ only absorbs the blue light and thus provides the photoacoustic signal at the modulation frequency.

US2021/0293696 discloses a resonant photoacoustic gas sensor using laser wavelength modulation instead of intensity modulation. Current modulation below the laser-emission threshold is used to heat the active region of the laser to modulate the emission wavelength. Appropriate modulation of the current above the lasing threshold allows for laser emission with modulated wavelength but with constant intensity. Because the thermoacoustic background due to light absorption at the measurement cell walls depends only negligibly on the wavelength, the wall signal is not modulated and thus does not generate a thermoacoustic background signal upon demodulation.

### Disclosure of the invention

One aspect of the invention is a photoacoustic gas sensor for the detection of a target gas in a carrier gas. The photoacoustic gas sensor comprises a measurement cell enclosing a measurement volume of carrier gas, a light source arranged and configured to transmit light into the measurement volume for interaction with the target gas to induce photoacoustic pressure modulations in the measurement volume, and a pressure transducer arranged and configured to detect pressure modulations in the measurement volume. It further comprises a light source driver configured to modulate the power of the light source periodically such that the magnitude of the nth Fourier component of the resulting photoacoustic pressure modulations is indicative of the target gas concentration, where n is a positive natural number, and wherein under action of the light source driver the light source not only generates said light but also heat due to resistive heating, the heat inducing unwanted thermoacoustic pressure modulations in the measurement volume. The photoacoustic gas sensor further comprises a heat source arranged in the measurement cell and a heat source driver configured to modulate the power of the heat source periodically to generate additional thermoacoustic pressure modulations such that the nth Fourier component of the additional thermoacoustic pressure modulations is out of phase with the nth Fourier component of the unwanted thermoacoustic pressure modulations arising from heat generated by the light source, thereby acting to attenuate the unwanted thermoacoustic pressure modulations in the measurement volume arising from heat generated by the light source.

When the light source power is modulated periodically the temperature and hence the pressure in the measurement cell are modulated accordingly because of light absorption by the target gas---the photoacoustic effect. The frequency of the periodic pressure modulation is given by the light power modulation frequency, and the amplitude is a

monotone function of the target gas concentration because the more molecules of the target gas are available to absorb light, the more light energy is transduced into heat and thus pressure change. In particular, the magnitude of a Fourier component is indicative of the target gas concentration, because a periodic function may be represented by its Fourier series,

$$f(t) = \sum_{n=-\infty}^{\infty} C_n e^{\frac{2\pi int}{T}} ,$$

where $T$ is the period of the periodic function $f(t)$, $C_n$ are called Fourier coefficients, and $C_n e^{\frac{2\pi int}{T}}$ the corresponding Fourier components. The target gas may be a gas representing indoor air quality, such as carbon dioxide, a combustible gas such as propane or methane, or a gas representing a metabolic state, such as acetone. The carrier gas is usually ambient air, but any carrier gas with light absorption characteristics different from the target gas may be used for the present invention.

The pressure transducer can detect the periodic pressure modulations and output a corresponding periodic signal such as a capacitance modulation which may be used for the signal processing, optionally after digitization. The pressure transducer may be placed outside the measurement cell, as long as it is in acoustic communication with the measurement volume of air comprised in it. The coefficient of the fundamental frequency is preferred as a proxy for the target gas concentration, but the coefficient of a higher harmonic may be used instead.

The light source when power modulated also induces sound pressure modulations in the measurement cell via the thermoacoustic effect: Thermal energy is generated in the light source by Joule heating, which is also called resistive heating or electric heating. A part of this thermal energy in the light source is transferred as heat to the gas molecules in the measurement volume, by increasing their kinetic energy via collisions. Note that transfer of heat by thermal radiation is negligible.

Thus, the light source generates a thermoacoustic background signal even in the absence of target gas. When the light source power is modulated periodically, the resistive heating is modulated accordingly and hence the air in the measurement cell is heated periodically as well. The resulting temperature and hence pressure changes are detected by the pressure transducer as a thermoacoustic background signal. Because the thermoacoustic background signal has by design the same periodicity as the photoacoustic signal the background is also present in the Fourier coefficients. The light source driver and the heat source driver may be located outside the measurement cell. The electrical leads connecting light source driver and light source will also generate a thermoacoustic background. If the thermoacoustic backgrounds are in phase, the compensation scheme described below will work simultaneously for all of them.

The basic idea is that background compensation can be achieved by purposefully generating additional pressure modulations by a heat source arranged in the measurement cell that interfere destructively with the pressure modulations due to the thermoacoustic background. The thermoacoustic background is to a good approximation independent of the target gas concentration if the latter is in the ppb to low percent range and therefore does not change the thermal properties of the gas mix in the measurement cell substantially. In that manner, the ratio of useful photoacoustic signal, which depends on the target gas concentration, to background signal is increased.

The heat source driver may be configured to modulate the heat source power in such a way that the fundamental Fourier component of the resulting pressure modulation is out of phase with the fundamental Fourier component of the thermoacoustic background and thus the two cancel by destructive interference. Total cancellation is achieved if the phase shift is 180° and the amplitudes are equal. A phase shift between 160° and 200°, preferably between 170° and 190°, preferably between 175° and 185° may be preferred. Depending on the amount of heating power available for the background compensation, the amplitudes may not be equal and cancellation may be only partial even for a phase shift of 180°.

Preferably, the fundamental Fourier component of the thermoacoustic background is canceled, but a higher harmonic may be canceled instead, depending on which Fourier coefficient is intended to be used as a proxy for the target gas concentration. Note that the pressure modulation may not be directly controllable because the pressure modulation may only be a transduced result of a modulation that is actually controllable, such as heating power modulation.

In an embodiment, the modulation frequency of the light source is between 30 hertz and 10 kilohertz, preferably between 80 hertz und 5 kilohertz.

For miniaturized devices, an acoustically non-resonant operation may be advantageous because the photoacoustic signal scales inversely with the light modulation frequency.

In an embodiment, the light source may be arranged in the measurement cell.

If the light source is arranged inside the measurement cell there is no need for entry windows or alignment optics

to shine the light into the measurement cell, making the construction of the photoacoustic gas sensor simpler, smaller, and cheaper than using an external light source.

In an embodiment, the heat source is a resistive heater, preferably of surface mountable device (SMD) type.

In case the substrate is a printed circuit board it may be cost effective if components are of SMD type to streamline assembly.

In an embodiment, the light source is a semiconductor device, such as an LED, or a semiconductor laser.

Semiconductor devices are cost-effective and small. In addition, for certain combinations of target gas and desired concentration signal noise level the wall-plug-efficiency and wavelength emission needs may best be satisfied by a semiconductor laser, preferably an interband cascade laser (ICL) or a quantum cascade laser (QCL).

In an embodiment, the semiconductor laser has a dual function, both as the light source and as the heat source for the compensation pulses. The light source is the semiconductor laser operated at a power level above the lasing threshold, whereas the heat source is the semiconductor laser operated at a lower power level, preferably below 30% of the power level when used as the light source, preferably below 10% of the power level when used as the light source.

This has the advantage that no additional component is needed for the heat source, and that the thermal properties of the light source and the heat source are as closely matched as possible, the only difference being the voltage level. The lower the power of the light source when used as the compensation heat source, the lower the loss of photoacoustic sensitivity because of out-of-phase photoacoustic pressure modulations in case the power level is still above the lasing threshold.

In an embodiment, the light source is a semiconductor laser, and the heat source is the same semiconductor laser but operated below the lasing threshold.

Ideally, the power of the laser light source when used as the heat source is lowered below the lasing threshold. In this case, there is no loss of photoacoustic sensitivity. However, depending on the modulation scheme and the laser, total cancellation may not be possible for every power level of the heat source. Note that in this embodiment whenever the heat source is referenced it is implied that the laser power is below the lasing threshold, and whenever the powered light source is referenced it is implied that the laser power is above the lasing threshold.

In an embodiment, the light source is a ridge-waveguide laser, and the heat source is a second waveguide ridge comprised in the ridge-waveguide laser, which does not couple out light.

This has the advantage that pulses of the same voltage can be applied to the blind ridge and the laser ridge. This eliminates the need for different voltage levels.

A second aspect of the invention is a measurement method for determining a target gas concentration in a carrier gas using a photoacoustic gas sensor, where the photoacoustic gas sensor comprises a measurement cell enclosing a measurement volume of carrier gas, a light source arranged and configured to transmit light into the measurement volume for interaction with the target gas to induce photoacoustic pressure modulations, a heat source arranged in the measurement cell to induce thermoacoustic pressure modulations in the measurement volume, and a pressure transducer arranged and configured to output a signal indicative of the pressure modulations in the measurement volume. The measurement method comprises ensuring the measurement volume is substantially free of the target gas, modulating the input power of the light source periodically with a given period, modulating the input power of the heat source periodically with said period, adjusting the phase and the amplitude of the modulation of the heat source relative to the light source to minimize the signal output by the pressure transducer, fixing said phase and said amplitude of the modulation of the heat source, letting target gas enter the measurement volume, and outputting the signal.

The optimal parametrization of the compensation heating power modulation may depend on environmental parameters such as pressure, temperature, and relative humidity, which may not be known at the time of target gas concentration measurement. The initial optimal parametrization may have been determined in a factory calibration setting of fixed environmental conditions. In operation, these conditions may change, or the heat characteristics of the light source or the heat dissipation characteristics of the entire photoacoustic gas sensor may change over time. It is then possible that the factory parametrization of the compensation heating power modulation is no longer optimal and the thermoacoustic background is no longer optimally compensated. If a reference state that is substantially free of target gas can be determined in operation, for example by using prior knowledge about the expected target gas concentration trajectory over time, this reference state can be used to find a new optimal parametrization of the compensation heating power modulation by adjusting the phase and the amplitude of the periodic heating power modulation in operation---that is, while the light source is being periodically modulated --- such that the pressure transducer signal in the reference state vanishes or is at least minimized if it cannot be made to vanish entirely. The new optimal heating power modulation parameters are then fixed, and as soon as target gas enters the measurement volume, the pressure transducer signal will be indicative of the target gas concentration with a minimal thermoacoustic background.

## Brief description of drawings

Figure 1 shows a schematic of a photoacoustic gas sensor.

Figure 2 shows a schematic of a photoacoustic gas sensor where the measurement volume is the front chamber of a top port microphone.

Figure 3 shows a schematic of a photoacoustic gas sensor where the measurement volume is the back chamber of a top port microphone.

Figure 4 shows an idealized operating scheme for a photoacoustic gas sensor.

Figure 5 shows experimental measurement data collected with a photoacoustic gas sensor.

## Detailed description of ways of carrying out the invention

The photoacoustic gas sensor 1 shown in Figure 1 comprises a substrate 23 such as a printed circuit board and a cover 22 such as a metal cap glued airtight onto the circuit board. In cooperation, the substrate and the cover form the measurement cell 2 enclosing the measurement volume 21. On the substrate and in the measurement cell there is a light source 3, a pressure transducer 4 in the form of a MEMS microphone 12, and a heat source 5 such as a resistive heater. The microphone 12 is arranged and configured to detect sound pressure modulations in the measurement cell. A light source driver 31, for example implemented in an ASIC, is located on the substrate 23 and configured to modulate the power of the light source 3 periodically. A heat source driver 51 is located on the substrate and configured to modulate the power of the heat source 5 periodically. The heat source driver 51 may be the light source driver 31. The measurement cell 2 is configured to receive the air comprising the target gas, for instance via gas inlet 25 which may be covered by a porous membrane 24. Alternatively, part of the cover 22 may be perforated or made from a porous material to allow diffusion of the target gas into the measurement volume but prevent convective escape of air on a timescale of the light modulation period. Supporting electronic components such as capacitances may be arranged on the substrate, preferably outside of the measurement cell.

In a further miniaturization step shown in Figure 2, the photoacoustic gas sensor 1 is formed by a top port microphone 12 comprising as substrate 23 a printed circuit board, as cover 22 a metal cap, and as pressure transducer 4 a microphone MEMS die 13. It further comprises an ASIC die 31, 51 that is configured to modulate the input power of both the heat source 5 and the light source 3. The measurement volume 21 is the front chamber of the top port microphone. A laser 3 such as an ICL or a QCL is placed inside the front chamber on the printed circuit board. The laser operated below the lasing threshold constitutes the heat source 5. The top port 25 forms the gas inlet and may be covered by a porous membrane 24.

In an even further miniaturization step shown in Figure 3, the photoacoustic gas sensor 1 may be formed partly by a MEMS die 13 itself. The measurement volume 21 may be the back chamber of a top port MEMS microphone 12. The pressure transducer 4 comprises a membrane 41 comprising vent holes 25 which act as the high pass filter for low frequency roll off of the MEMS microphone. In this embodiment, the vent holes 25 would also act as inlet for the target gas into the measurement volume 21. As in the above embodiment, the ASIC die 31, 51 of the MEMS microphone 12 functions as both light source and heat source driver. A laser 3 such as an ICL or a QCL is placed inside the back chamber on the printed circuit board. The laser operated below the lasing threshold constitutes the heat source 5. Note that this design would be more susceptible to external noise because the pressure transducer is part of the cover of the measurement cell.

Figure 4 shows power time series of both resistive heating pulses 6 during light emission and compensation heat pulses 61 according to an embodiment of the invention. Resistive heating power level, *A,* may for instance be higher than compensation heat power level *B,* for instance when *A* is the resistive heating power level associated with a laser operated above the lasing threshold, and *B* the heat power level with the laser operated below it. The resistive heating pulse train has width $\Delta t_L$ and amplitude *A,* and the compensation heat pulse train has width $\Delta t_C$ and amplitude *B,* both with period *T.* The compensation heat pulse train is designed such that their fundamental Fourier components are phase-shifted by 180°: The dotted line 7 shows the fundamental Fourier component of the resistive heating pulse train, while the dotted-dashed line 71 shows the fundamental Fourier component of the compensation pulse train. It is evident that the two sinusoidal signals have opposite sign and identical amplitude and thus cancel each other, which leads to zero signal in the fundamental frequency. Note that in case the light source is a laser, the power supplied to the laser is in good approximation the same as the resistive heating power if the wall-plug efficiency is small, say below 10%.

The condition for exact cancellation of the resistive heating pulse by the compensation pulse can be inferred from the Fourier coefficients of the rectangular signal shown in Figure 4,

$$C_n \propto \frac{1}{n}\left[A \sin\left(\frac{\pi n\, \Delta t_L}{T}\right) + B \sin\left(\frac{\pi n\, \Delta t_C}{T} + \pi n\right)\right].$$

Cancellation in the fundamental frequency, *n* = 1, hence occurs for

$$A \sin\left(\frac{\pi \Delta t_L}{T}\right) = B \sin\left(\frac{\pi \Delta t_C}{T}\right), \quad \text{(Eq. 1)}$$

and the parameters *A, B,* $\Delta t_L$, $\Delta t_C$, *T* can be chosen accordingly. Note that for an ideal system the cancellation condition (Eq. 1) is a strict equality, while in reality the condition is only approximate because the actual heating of the gas in the measurement cell will only consist approximately of square pulses. Moreover, only the heating power has been considered instead of the resulting pressure signal, which is the physical quantity that is actually measured. Non-idealities in the conversion from the heat pulses to the pressure pulses may also lead to slight changes in the exact cancellation condition of the thermoacoustic background.

In an analogous manner, the cancellation condition for a higher harmonic ($n > 1$) can be determined in case the demodulation of the microphone signal is performed at the higher harmonic instead of the fundamental frequency. Also, rectangular pulses are not necessary for the cancellation scheme to work. As long as the *n*-th Fourier component of the resistive heating modulations from the light source and the compensation heat power modulations cancel each other, the thermoacoustic background at that demodulation frequency vanishes.

Figure 5A shows a panel of measurement data collected with an embodiment of the invention according to Figure 2. The photoacoustic gas sensor is formed by a digital top port MEMS microphone of CUI Devices (model CMM-4030DT-261280-TR) in which an interband cascade laser was placed as a light source that emits at approximately 3010 inverse centimeters. The acoustic top port forms the gas inlet and is covered by an expanded PTFE membrane. The measurement volume is approximately 6 cubic millimeters. The light modulation frequency is 308.6 hertz and the laser pulse width $\Delta t_L$ is 400 microseconds. The heater is the same interband cascade laser operated below the lasing threshold. Propane in ambient air is the target gas, and its concentration is varied from 0% to 0.7% by volume and back to 0% in four steps during the measurement. The beneficial influence of a compensation heating pulse at 308.6 hertz is demonstrated. The compensation pulse scheme is designed such that the fundamental Fourier component of the thermoacoustic pressure modulations induced by the heater is 180° phase-shifted from the fundamental Fourier component of the thermoacoustic pressure modulations induced by the resistive heating due to the light source, which is the same laser but operated above the lasing threshold. The two thermoacoustic pressure modulations interfere destructively, and by tuning the parameters according to (Eq. 1) the destructive interference can be made total by matching the amplitudes. The rectangular pulse train scheme shown in Figure 5B was applied, generated by a Keysight 33220A Arbitrary Waveform Generator with an output impedance of 50 ohm. Current measurements were performed via voltage drop measurements over a shunt resistor of 10 ohm. One period of 1/308.6 hertz = 3.24 milliseconds is shown. The applied voltage of V1=7.2 volts results in a laser voltage drop of around 3.5 volts and a lasing power level of A=210 milliwatt, and an applied voltage of V2=4.482 volts results in a laser voltage drop of about 2.8 volts and a sub-lasing power level of B=80 milliwatt. Fixing parameters t1 and t3 at 0.4 milliseconds and 2.64 milliseconds, respectively, parameter t2 was varied and it was found that t2=0.991 milliseconds leads to minimal background microphone signal in absence of propane. Note that the theoretically optimal parameter t2 according to (Eq. 1) may deviate from the actually optimal value. This is because (Eq. 1) describes the cancellation condition for idealized rectangular pulses of pressure variations, but the transduction from applied voltage to pressure smoothes the rectangular pulses. Also, it is assumed that all the power at level A is converted to heat immediately where in reality a part of it is converted to light first. Also note that it may be advantageous to operate the light source, particularly in case of a QCL, in burst mode to save power and reduce self-heating, that is, $\Delta t_L$ and $\Delta t_C$ are subdivided in pulses of width of the order of 100 nanoseconds to a few microseconds.

Lower panels of Figure 5A: Applied propane gas steps (dashed line) and ambient relative humidity (solid line) measured close to the photoacoustic cell. The ambient temperature was constant at approximately 25°C. The left y-axis is measured in percentage points relative humidity, and the right y-axis is measured in volume percent propane.

Upper left: Magnitude of the fundamental Fourier coefficient of the microphone signal (arbitrary units) at 308.6 hertz when no compensation pulse is used. The thermoacoustic background is orders of magnitude larger than the photoacoustic propane concentration signal. In addition, a pronounced cross-sensitivity to humidity and a baseline drift are demonstrated.

Upper right: Magnitude of the fundamental Fourier coefficient of the microphone signal at 308.6 hertz when the compensation pulse as described above is turned on. The magnitude of the Fourier component is clearly indicative of the propane concentration. The cross-sensitivity to humidity is reduced as well, indicating that it is mainly due to the change of thermal conductivity of air with changing humidity, influencing the thermoacoustic effect and thus the background signal. The parametrization for exact cancellation is a function of any environmental parameter that modifies the thermal properties of the measurement volume of air, such as ambient temperature and pressure. Note that it may be beneficial not to output the magnitude of the Fourier coefficient, when considered in the complex plane, but its projection on a direction orthogonal to the direction of the Fourier coefficient of the thermoacoustic background. The reason for this is that changes in the thermoacoustic background due to changing ambient parameters such as pressure or temperature may be analogous to varying the heating power and thus mainly scale the Fourier coefficient of the thermoacoustic background

without changing its direction substantially.

List of reference signs

| | |
|---|---|
| 1 | Photoacoustic gas sensor |
| 12 | Top port MEMS microphone |
| 13 | MEMS microphone die |
| 2 | Measurement cell |
| 21 | Measurement volume |
| 22 | Cover |
| 23 | Substrate |
| 24 | Porous membrane |
| 25 | Gas inlet |
| 3 | Light source |
| 31 | Light source driver |
| 4 | Pressure transducer |
| 5 | Heat source |
| 51 | Heat source driver |
| 6 | Resistive heating pulse power |
| 61 | Compensation heating pulse power |
| 7 | Fundamental Fourier component of the laser pulse |
| 71 | Fundamental Fourier component of the compensation pulse |

## Claims

**1.** Photoacoustic gas sensor (1) for the determination of a target gas concentration in a carrier gas comprising

a measurement cell (2) enclosing a measurement volume (21) of carrier gas;
a light source (3) arranged and configured to transmit light into the measurement volume (21) for interaction with the target gas to induce photoacoustic pressure modulations in the measurement volume (21);
a pressure transducer (4) arranged and configured to detect pressure modulations in the measurement volume (21);
a light source driver (31) configured to modulate the power of the light source (3) periodically such that the magnitude of the nth Fourier component of the resulting photoacoustic pressure modulations is indicative of the target gas concentration, where n is a positive natural number, and wherein under action of the light source driver (31) the light source (3) not only generates said light but also heat due to resistive heating, the heat inducing unwanted thermoacoustic pressure modulations in the measurement volume (21), and
a heat source (5) arranged in the measurement cell (2);
a heat source driver (51) configured to modulate the power of the heat source (5) periodically to generate additional thermoacoustic pressure modulations such that the nth Fourier component of the additional thermoacoustic pressure modulations is out of phase with the nth Fourier component of the unwanted thermoacoustic pressure modulations arising from heat generated by the light source (3), thereby acting to attenuate the unwanted thermoacoustic pressure modulations in the measurement volume (21) arising from heat generated by the light source (3).

**2.** Photoacoustic gas sensor according to claim 1,
wherein the light source driver (31) is configured to modulate the light source (3) at a modulation frequency between 30 hertz and 10,000 hertz, preferably between 80 hertz und 5,000 hertz.

**3.** Photoacoustic gas sensor according to any preceding claim,
wherein the light source (3) is arranged in the measurement cell (2).

**4.** Photoacoustic gas sensor according to any preceding claim,
wherein the light source (3) is a semiconductor device.

**5.** Photoacoustic gas sensor according to claim 4,

wherein the semiconductor device is a semiconductor laser.

6. Photoacoustic gas sensor according to claim 5,
wherein the semiconductor laser is selected from the group consisting of an Interband Cascade Laser and a Quantum Cascade Laser.

7. Photoacoustic gas sensor according to claim 5 or 6,
wherein the heat source (5) is the semiconductor laser configured to be operated at a power level below the power of the light source (3).

8. Photoacoustic gas sensor according to claim 7,
wherein the heat source (5) is the semiconductor laser configured to be operated at a power level below 30% of the power of the light source (3), preferably below 10% of the power of the light source (3).

9. Photoacoustic gas sensor according to claim 7,
wherein the heat source (5) is the semiconductor laser configured to be operated below the lasing threshold.

10. Photoacoustic gas sensor according to claim 5 or 6,
wherein the heat source is a semiconductor laser configured to emit light of a different wavelength than the light source (3).

11. Photoacoustic gas sensor according to claim 5 or 6,

wherein the semiconductor laser is a ridge-waveguide laser, and
wherein the heat source (5) is a second waveguide ridge comprised in the ridge-waveguide laser, which does not couple out light.

12. Photoacoustic gas sensor according to claim 1 to 6,
wherein the heat source (5) is a resistive heater.

13. Measurement method for determining a target gas concentration in a carrier gas using a photoacoustic gas sensor, the photoacoustic gas sensor comprising a measurement cell (2) enclosing a measurement volume (21) of carrier gas, a light source (3) arranged and configured to transmit light into the measurement volume (21) for interaction with the target gas to induce photoacoustic pressure modulations, a heat source (5) arranged in the measurement cell (2) to induce thermoacoustic pressure modulations in the measurement volume (21), and a pressure transducer (4) arranged and configured to output a signal indicative of the pressure modulations in the measurement volume (21),

the measurement method comprising
ensuring the measurement volume (21) is substantially free of the target gas;
modulating the input power of the light source (3) periodically with a given period;
modulating the input power of the heat source (5) periodically with said period, adjusting the phase and the amplitude of the modulation of the heat source (5) relative to the light source (3) to minimize the signal output by the pressure transducer (4);
fixing the phase and the amplitude of the modulation of the heat source (5);
letting target gas enter the measurement volume (21);
outputting the signal.

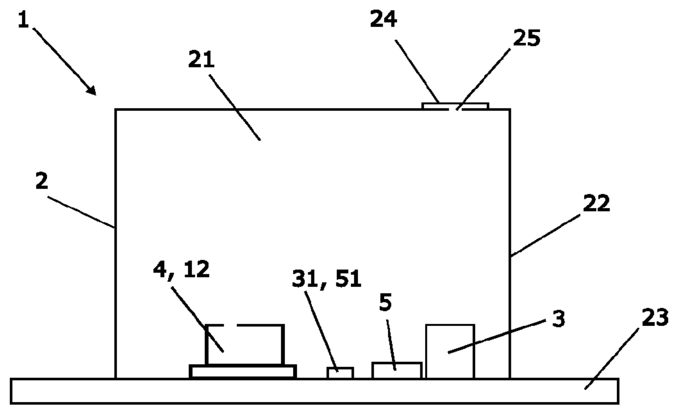


Fig. 1

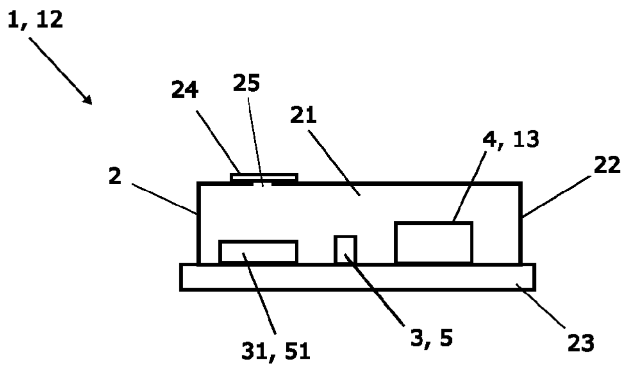


Fig. 2

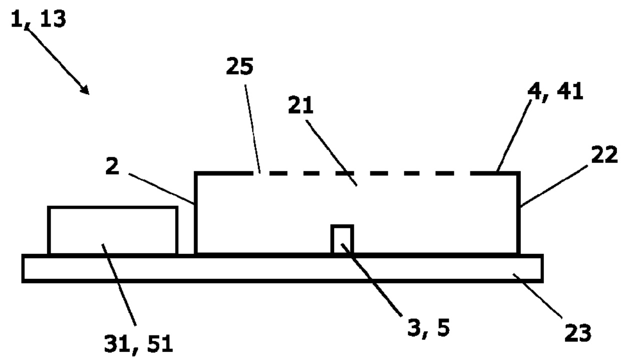


Fig. 3

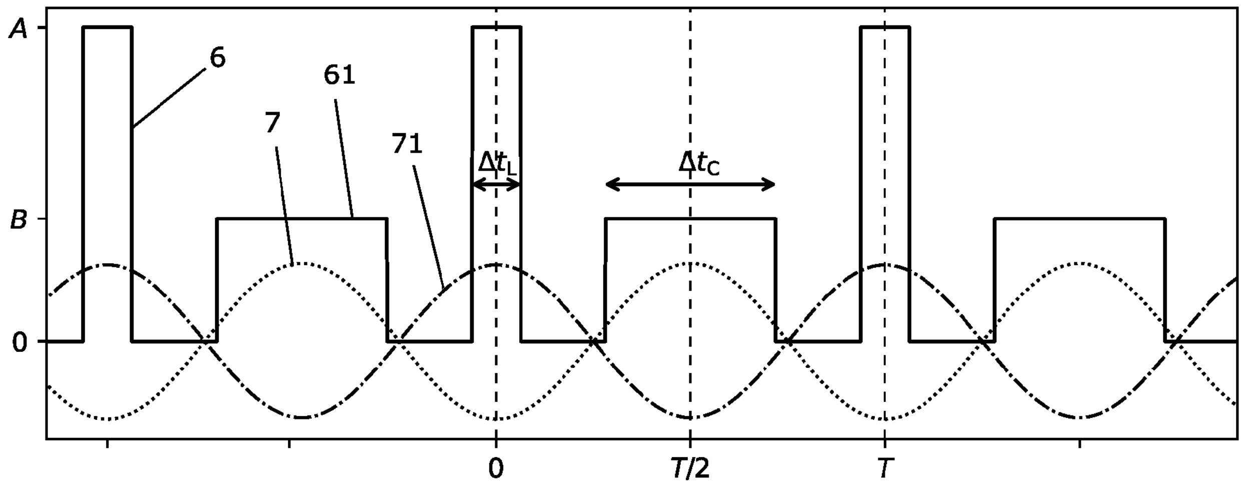


Fig. 4

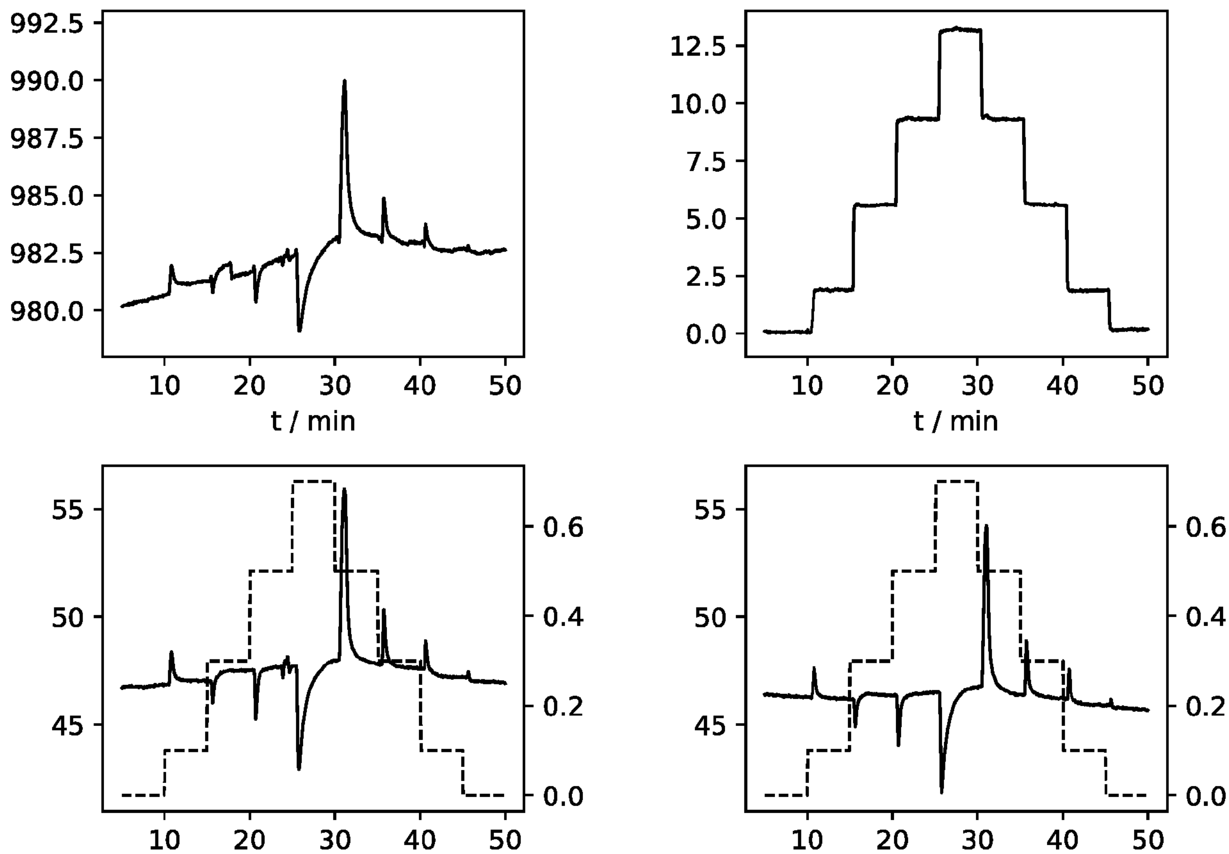
992.5
990.0
987.5
985.0
982.5
980.0
10 20 30 40 50
t / min
12.5
10.0
7.5
5.0
2.5
0.0
10 20 30 40 50
t / min
55
50
45
0.6
0.4
0.2
0.0
10 20 30 40 50
55
50
45
0.6
0.4
0.2
0.0
10 20 30 40 50

Fig. 5A

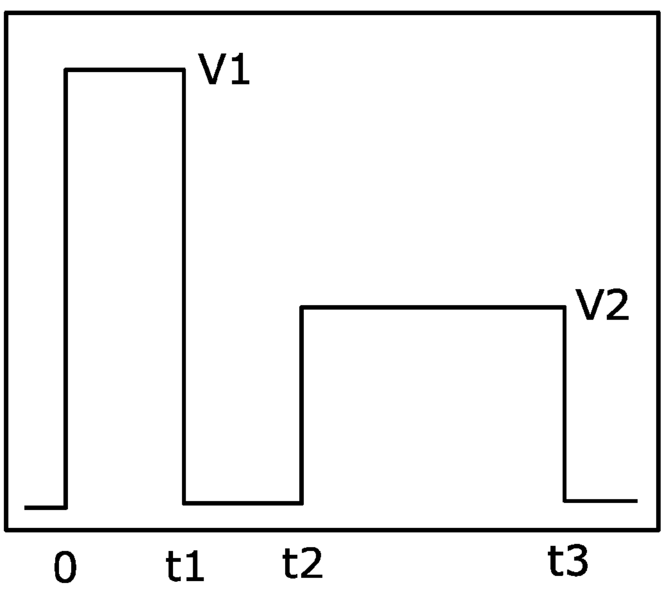
V1
V2
0
t1
t2
t3

Fig. 5B

Europäisches Patentamt
European Patent Office
Office européen des brevets

# EUROPEAN SEARCH REPORT

Application Number
EP 24 18 3269

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2019/360975 A1 (EBERL MATTHIAS [DE] ET AL) 28 November 2019 (2019-11-28)<br>* paragraphs [0002], [0004], [0005], [0007], [0015], [0016], [0018] - [0033], [0042], [0050]; figures 1-3 * | 1,4,5, 12,13<br>1-6,10, 13 | INV. G01N21/17 |
| Y | US 2022/187193 A1 (UEHLINGER THOMAS [CH]) 16 June 2022 (2022-06-16)<br>* paragraphs [0004], [0005], [0008], [0009], [0023] * | 1-6,10, 13 | |
| A | US 5 841 017 A (BARAKET MOURAD [CH] ET AL) 24 November 1998 (1998-11-24) | 1,3 | |

TECHNICAL FIELDS SEARCHED (IPC)

G01N

The present search report has been drawn up for all claims

1

| Place of search | Date of completion of the search | Examiner |
|---|---|---|
| Munich | 3 December 2024 | Weinberger, Thorsten |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 24 18 3269

This annex lists the patent family members relating to the patent documents cited in the above-mentioned European search report. The members are as contained in the European Patent Office EDP file on
The European Patent Office is in no way liable for these particulars which are merely given for the purpose of information.

03-12-2024

| Patent document cited in search report | Publication date | Patent family member(s) | Publication date |
|---|---|---|---|
| US 2019360975 A1 | 28-11-2019 | DE 102018112341 A1 | 28-11-2019 |
| | | US 2019360975 A1 | 28-11-2019 |
| US 2022187193 A1 | 16-06-2022 | CN 113795747 A | 14-12-2021 |
| | | EP 3550286 A1 | 09-10-2019 |
| | | JP 7516418 B2 | 16-07-2024 |
| | | JP 2022528805 A | 15-06-2022 |
| | | KR 20210154159 A | 20-12-2021 |
| | | US 2022187193 A1 | 16-06-2022 |
| | | WO 2020212481 A1 | 22-10-2020 |
| US 5841017 A | 24-11-1998 | AT E268472 T1 | 15-06-2004 |
| | | CA 2200137 A1 | 25-09-1997 |
| | | EP 0801296 A1 | 15-10-1997 |
| | | ES 2222489 T3 | 01-02-2005 |
| | | PT 798552 E | 29-10-2004 |
| | | US 5841017 A | 24-11-1998 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 3550286 A
- US 20210293696 A